# EUROPÄISCHE PATENTSCHRIFT

(11) **EP 3 712 320 B1**
(45) Veröffentlichungstag und Bekanntmachung des Hinweises auf die Patenterteilung: **24.07.2024**
(21) Anmeldenummer: 20158418.2
(22) Anmeldetag: 20.02.2020
(51) Int. Cl.: D06F 39/10, D06F 39/00, D06F 39/08, A47L 15/42

(54) **WASSERFÜHRENDES HAUSHALTSGERÄT UND VERFAHREN ZU SEINEM BETRIEB**
WATER-CONVEYING HOUSEHOLD APPLIANCE AND METHOD FOR OPERATING SAME
APPAREIL ÉLECTROMÉNAGER À CIRCULATION D'EAU ET SON PROCÉDÉ DE FONCTIONNEMENT

(30) Priorität: 20.03.2019 DE 102019203809
(43) Veröffentlichungstag der Anmeldung: 23.09.2020
(73) Patentinhaber: E.G.O. Elektro-Gerätebau GmbH, 75038 Oberderdingen (DE)
(72) Erfinder: Bold, Georg, 79104 Freiburg (DE); Kampowski, Tim, 79106 Freiburg (DE); Langer, Max, 79117 Freiburg (DE); Schaumann, Uwe, 75038 Oberderdingen (DE); Speck, Thomas, 79227 Schallstadt (DE); Thielen, Marc, 79106 Freiburg (DE)
(74) Vertreter: Patentanwälte Ruff, Wilhelm, Beier, Dauster & Partner mbB

(56) Entgegenhaltungen:
- EP-A1- 1 743 871
- EP-A1- 3 369 855
- CN-A- 109 457 440
- DE-A1- 102008 042 749

## Beschreibung

### Anwendungsgebiet und Stand der Technik

Die Erfindung betrifft ein wasserführendes Haushaltsgerät, insbesondere eine Waschmaschine oder eine Geschirrspülmaschine. Ebenso betrifft die Erfindung ein Verfahren zum Betrieb eines solchen wasserführenden Haushaltsgeräts.

Aus der EP 2785236 A1 ist eine Waschmaschine bekannt mit einer Wasserführung mittels Wasserleitungen, bei der ein Partikelfilter vorgesehen ist, der rückgespült werden kann zu seiner Reinigung.

Aus der CN 109457440 A ist eine Waschmaschine bekannt mit einer Trommel sowie einer Wasserführung in der Waschmaschine, unter anderem mit einer Pumpe, Wasserleitungen und Ventilen. Dabei ist ein Wasserbehälter vorgesehen, in dem sich eine Flockungs-Vorrichtung zur elektrischen Flockung befindet. Diese weist eine Anode und eine Kathode auf, die an eine Gleichspannungsquelle angeschlossen sind. Durch Anlegen der Spannung werden Sauerstoff und Wasserstoff gebildet um kleinste Luftbläschen zu bilden, die eine Ausflockung von Verunreinigungen wie Reinigungsmittel, Spülrückstände, Bakterien odgl. bewirken. Diese klumpen im Rahmen der Flockung zusammen und schwimmen auf, so dass sie dann leichter entfernt werden können.

Aus der EP 1 743 871 A1 ist ein Mehrtankreinigungsautomat bekannt, mit dem Prozesswasser in einem Reinigungsautomat aufgebreitet werden kann. Das Prozesswasser wird dabei durch mehrere Filterstufen gegeben, so dass es mehrfach gereinigt wird. Als Prozesswasser kann beispielsweise Wasser einer Geschirrspülmaschine gereinigt werden.

Aus der EP 3 369 855 A1 ist eine Waschmaschine bekannt, in der Wasser in einen Kreislauf zirkulieren kann. Zum Reinigen von Prozesswasser kann einerseits eine Trenn-Zentrifuge vorgesehen sein und andererseits eine Vorrichtung, um Verunreinigungen durch Elektrokoagulation entsprechend der vorbeschriebenen Ausflockung zusammenklumpen zu können. So können sie besser entfernt werden.

Aus der DE 10 2008 042 749 A1 ist ein Verfahren bekannt zum Reinigen von Flüssigkeit in einer Waschmaschine. Zum Abbau von Tensiden in Prozesswasser der Waschmaschine wird ein Katalysator verwendet, wobei Wasser aus einer Waschtrommel durch den Katalysator gepumpt werden kann.

### AUFGABE UND LÖSUNG

Der Erfindung liegt die Aufgabe zugrunde, ein eingangs genanntes wasserführendes Haushaltsgerät sowie ein Verfahren zu dessen Betrieb zu schaffen, mit denen Probleme des Stands der Technik gelöst werden können und es insbesondere möglich ist, Wasser, das in dem Haushaltsgerät geführt wird, untersuchen zu können.

Gelöst wird diese Aufgabe durch ein wasserführendes Haushaltsgerät mit den Merkmalen des Anspruchs 1 sowie durch ein Verfahren zu seinem Betrieb mit den Merkmalen des Anspruchs 11. Vorteilhafte sowie bevorzugte Ausgestaltungen der Erfindung sind Gegenstand der weiteren Ansprüche und werden im Folgenden näher erläutert. Dabei werden manche der Merkmale nur für das Haushaltsgerät oder nur für das Verfahren beschrieben. Sie sollen jedoch unabhängig davon sowohl für das Haushaltsgerät als auch für das Verfahren zu seinem Betrieb selbständig und unabhängig voneinander gelten können. Der Wortlaut der Ansprüche wird durch ausdrückliche Bezugnahme zum Inhalt der Beschreibung gemacht.

Es ist vorgesehen, dass das wasserführende Haushaltsgerät mindestens eine Behandlungskammer aufweist, die verschließbar ist, vorteilhaft mittels einer an sich bekannten Tür, und in der Gegenstände behandelt werden können. Vorteilhafte Beispiele für derartige Gegenstände sind Geschirr in einer Spülmaschine oder Wäsche in einer Waschmaschine. Es gibt mindestens einen Wassereinlass in die Behandlungskammer sowie mindestens einen Wasserauslass aus der Behandlungskammer. Des Weiteren ist mindestens eine Pumpe vorgesehen, die dem Wasserauslass nachgeschaltet ist. Sie kann dem Wasserauslass direkt nachgeschaltet sein, vorteilhaft mit einer kurzen Wasserleitung dazwischen. Alternativ können noch weitere Funktionseinheiten, wie sie nachfolgend erläutert werden, wie zum Beispiel Filter und/oder Ventileinrichtungen, zwischengeschaltet sein.

Des Weiteren weist das Haushaltsgerät Wasserleitungen und Ventileinrichtungen und/oder Wasserfluss-Einstellmittel auf. Ventileinrichtungen können nach Art von üblichen Ventilen ausgebildet sein, beispielsweise Absperrventile, Schieberventile, Proportionalventile und/oder Drei-Wege-Ventile oder sogar Vier-Wege-Ventile. Wasserfluss-Einstellmittel können beispielsweise auch eine vorgenannte Pumpe umfassen, die mehrere Auslässe aufweist, die unterschiedlich ansteuerbar sind bzw. verschließbar sind.

Des Weiteren weist das Haushaltsgerät mehrere Filter auf, nämlich einen Grob-Filter für Wasser und einen Fein-Filter für Wasser. Der Grob-Filter weist mindestens einen Grob-Filtereinlass auf, zu dem zu filterndes Wasser hineinfließt, und mindestens einen Grob-Filterauslass auf, an dem grob gefiltertes Wasser austritt. Des Weiteren weist er einen Grob-Filtratauslass auf, zu dem Grob-Filtrat herausgeführt werden kann, insbesondere durch Rückspülen herausgespült werden kann. Der Grob-Filter ist an seinem Grob-Filtereinlass mittels einer Wasserleitung mit der Behandlungskammer verbunden, insbesondere mit mindestens einem Wasserauslass aus der Behandlungskammer. Dabei können, wie zuvor bzgl. der Pumpe erläutert, noch verschiedene Funktionseinheiten dazwischengeschaltet sein.

Der Grob-Filter kann in einer Ausgestaltung der Erfindung auch unten an der Behandlungskammer vorgesehen sein, insbesondere bei einer Spülmaschine, wie dies teilweise schon bekannt ist, insbesondere in Siebform. Dann ist die Wasserleitung zwischen Grob-Filtereinlass und der Behandlungskammer sehr kurz. Alternativ kann der separate Grob-Filter vorgesehen sein wie zuvor beschrieben, und unten an der Behandlungskammer ist ein separater weiterer Filter als vorgenanntes Sieb vorgesehen. Damit können bei einer Spülmaschine größere Teile wie Kirschkerne odgl. zurückgehalten, die also noch nicht einmal zum Grob-Filter gelangen.

Der Fein-Filter ist grundsätzlich ähnlich wie der Grob-Filter aufgebaut. Er weist mindestens einen Fein-Filtereinlass auf, zu dem Wasser hineinfließen kann, sowie mindestens einen Fein-Filterauslass, an dem fein gefiltertes Wasser austritt. Des Weiteren weist er mindestens einen Fein-Filtratauslass auf, zu dem Fein-Filtrat herausgeführt werden kann, insbesondere wiederum durch Rückspülen wie zuvor genannt. Der Fein-Filter ist an mindestens einem Fein-Filtereinlass mittels einer Wasserleitung mit mindestens einem Grob-Filterauslass verbunden, wobei auch hier mindestens eine der vorgenannten Funktionseinheiten dazwischengeschaltet sein kann. Insbesondere ist mindestens eine Ventileinrichtung dazwischengeschaltet, vorteilhaft auch eine Pumpe.

Der Grob-Filter und der Fein-Filter unterscheiden sich also vor allem dadurch, dass sie eben große oder kleine Partikel aus dem Wasser herausfiltern können. Vorteilhaft dient der Grob-Filter dazu, störende Bestandteile oder Partikel wie Speisereste, Eierschalen, Stoffflusen odgl. herausfiltern zu können, die die Pumpe und den Betrieb des Haushaltsgeräts negativ beeinträchtigen können. Diese Partikel können beispielsweise eine Größe von mindestens 0,5 mm oder mindestens 2 mm bzw. mindestens 3 mm aufweisen, um herausgefiltert zu werden. Der Fein-Filter dient vorteilhaft dazu, Partikel herauszufiltern, die mittels einer nachfolgend beschriebenen Messkammer untersucht werden können. So kann beispielsweise ein Verschmutzungsgrad des Wassers beim Betrieb des Haushaltsgeräts ermittelt werden, möglicherweise können auch störende Partikel oder Stoffe herausgefiltert werden, die nicht in das Abwasser gelangen sollen. Der Fein-Filter kann vorteilhaft Partikel mit einer Größe größer als 0,01 mm oder als 0,1 mm herausfiltern, die so für eine Messung gesammelt werden können.

Des Weiteren weist das Haushaltsgerät die vorgenannte Messkammer auf, in der Wasser und/oder Filtrat bzw. gesammelte Partikel oder Stoffe untersucht werden können. Diese Messkammer kann verschiedenartig ausgebildet sein, wie nachfolgend noch näher erläutert wird.

Das Haushaltsgerät weist mindestens einen Abfluss-Auslass aus dem Gerät auf, der in ein Abwasserrohr geführt ist. Des Weiteren weist das Haushaltsgerät mindestens ein Wasserreservoir auf, das mittels Wasserleitungen mit dem Abfluss-Auslass und/oder dem Grob-Filter und/oder dem Fein-Filter verbunden ist. Dieses Wasserreservoir kann unter anderem dazu verwendet werden, bereits einmal gefiltertes Wasser aufzubewahren, vorteilhaft für den Betrieb des Haushaltsgeräts selbst, beispielsweise zum Spülen, alternativ für ein Rückspülen eines der Filter, möglicherweise auch für den störungsfreien Betrieb der Pumpe, falls diese ein Nassläufer ist.

Hinter einem Grob-Filterauslass und einem Fein-Filterauslass führt jeweils eine Wasserleitung weg, in der eine Ventileinrichtung und/oder ein vorgenanntes Wasserfluss-Einstellmittel vorgesehen sind. Vorteilhaft ist jeweils eine Ventileinrichtung zwischen jedem dieser Auslässe und einer weiteren Funktionseinheit vorgesehen. Des Weiteren ist das Wasserreservoir mit dem Grob-Filterauslass und mit dem Fein-Filterauslass sowie mit einem Fein-Filtereinlass verbunden. Zwischen diesen Komponenten kann Wasser vorteilhaft in beide Richtungen fließen, also sowohl aus dem Wasserreservoir heraus als auch in das Wasserreservoir hinein. Ein solches Fließen des Wassers kann selbsttätig durch Schwerkraft erfolgen oder aber durch die Pumpe bewirkt werden.

Somit ist es mit der Erfindung möglich, unterschiedlich zu filtern und insbesondere auch zu untersuchendes Filtrat zu generieren, anhand dessen auf bestimmte Eigenschaften oder Zustände innerhalb der Behandlungskammer bzw. im verwendeten Wasser geschlossen werden kann. Des Weiteren kann ein Rückspülen der Filter erfolgen mit Wasser, das im Wasserreservoir gespeichert ist und welches schon einmal für den Betrieb des Haushaltsgeräts genutzt worden ist, wobei es vorteilhaft zuvor gefiltert worden ist. So braucht nicht zwingend sauberes Frischwasser für diesen Zweck verwendet zu werden. Durch die Pumpe bzw. Ventileinrichtungen oder die Wasserfluss-Einstellmittel kann der Wasserfluss vielfältig so geführt werden, wie er zum Filtern, zum Rückspülen, zum Untersuchen in der Messkammer oder zum Einspeisen oder Ausspeisen am Wasserreservoir vorteilhaft ist. Dabei ist vorteilhaft eben auch vorgesehen, während eines Spülvorgangs bei Betrieb des Haushaltsgeräts Wasser über bzw. durch den Grob-Filter zu der Pumpe zu pumpen, wobei diese Pumpe das Wasser durch den Fein-Filter zurück in die Behandlungskammer pumpt. Dabei können vorteilhaft Wasserreservoir und Messkammer umgangen werden. Mit dem Filtrat aus dem Fein-Filter kann dann, indem dieses durch Rückspülen des Fein-Filters und entsprechende Wasserleitungen aus einem Fein-Filtratauslass in die Messkammer geführt wird, eine Untersuchung von Partikeln bzw. Inhaltsstoffen in der Behandlungskammer erfolgen, welche aufgrund ihrer Größe in dem Fein-Filter zurückgehalten werden. So kann beispielsweise erkannt werden, ob ein Behandlungsvorgang in der Behandlungskammer ausreichend fortgeschritten ist, weil beispielsweise das Wasser ausreichend sauber ist bzw. weder Partikel noch Schmutz in zu hohem Maß vorhanden sind. Alternativ kann auch über eine mögliche weitere Filtrierung des Wassers entschieden werden, bevor dieses zum Abfluss-Auslass aus dem Haushaltsgerät gelassen wird, beispielsweise um Kunststoff-Mikrofasern weiter herauszufiltern und dann ggf. separat entsorgen zu können.

In einem alternativen Verfahren kann während eines Waschvorgangs beim Betrieb des Haushaltsgeräts Wasser bzw. Waschlauge aus der Behandlungskammer durch den Grob-Filter in die Pumpe fließen. Dann kann es von der Pumpe in den Abfluss-Auslass abgepumpt werden, insbesondere wenn es sich um relativ schmutziges Wasser handelt.

Ebenso ist es erfindungsgemäß möglich, zum Reinigen bzw. zum Rückspülen des Grob-Filters Wasser aus dem Wasserreservoir in den Grob-Filterauslass zu führen bzw. einzuleiten. Dies kann entweder durch eine höhere Anordnung des Wasserreservoirs selbsttätig erfolgen aufgrund der Schwerkraft, alternativ kann das Wasser gepumpt werden. Dann wird das Wasser aus dem Rückspülvorgang, in dem ausgespültes Grob-Filtrat enthalten ist, aus dem Grob-Filter in den Abfluss-Auslass gepumpt. So können insbesondere größere Partikel, wie sie zuvor genannt worden sind, die auch von der Pumpe ferngehalten werden sollten, aus dem Haushaltsgerät entfernt werden. Das Wasser aus dem Wasserreservoir kann zuvor eingespeichert worden sein und beispielsweise grob gefiltertes Wasser sein. Vorteilhaft wird hierfür fein gefiltertes Wasser verwendet, welches nach dem Grob-Filter also noch einmal durch den Fein-Filter gespült worden ist, so dass dann mittels des fein gefilterten Wassers ein besseres Rückspülen des Grob-Filters möglich ist. So wird dieser sowohl sauberer als auch, dass möglichst wenige neue Partikel oder Verschmutzungen in den Grob-Filter eingebracht werden.

In ähnlicher Form kann der Fein-Filter rückgespült werden, indem hierfür zuvor fein gefiltertes Wasser aus dem Wasserreservoir entnommen wird, welches dann zu dem Fein-Filterauslass in den Fein-Filter geführt bzw. gepumpt wird. Dieses Wasser kommt dann zum Fein-Filtratauslass heraus samt dem herausgespülten Fein-Filtrat, woraufhin es zum Abfluss-Auslass aus dem Haushaltsgerät herausgespült werden kann. Dies sollte natürlich nur dann gemacht werden, wenn das Fein-Filtrat, möglicherweise nach einer zuvor erfolgten Untersuchung in der Messkammer, als unbedenklich zum Herausspülen angesehen wird.

Bei der Erfindung wird Wasser aus dem Wasserreservoir nicht nur zum Rückspülen eines der Filter verwendet, sondern auch zum Reinigen der Pumpe. Auch hierfür wird vorteilhaft fein gefiltertes Wasser verwendet, welches im Wasserreservoir aufbewahrt worden ist nach der Fein-Filterung. Dieses Wasser wird in die Pumpe hinein- und wieder aus ihr herausgepumpt. Möglicherweise kann dies in einer Art Kreislauf erfolgen, wobei der Pumpe dann jeweils der Fein-Filter nachgeschaltet wird. So wird sichergestellt, dass auch kleine Partikel, welche beim Ausspülen der Pumpe im Fein-Filter herausgefiltert werden, beim Zirkulieren nicht wieder in die Pumpe gelangen. So wird sie allmählich sauberer, weil sie mit immer saubererem Wasser gespült wird bzw. dieses hindurch gepumpt wird.

In einer Ausgestaltung der Erfindung kann mindestens eine der Ventileinrichtungen als Absperrventil ausgebildet sein, vorzugsweise mehrere. Dies bedeutet, dass sie im Wesentlichen einen Wasserfluss durchlassen können oder absperren können. Gemäß einer weiteren Möglichkeit der Erfindung kann mindestens eine Ventileinrichtung als sogenanntes Proportionalventil ausgebildet sein, so dass sie sich auch dazu eignet, einen Wasserfluss nicht nur vollständig abzusperren oder vollständig durchzulassen, sondern in seiner Stärke bzw. im Durchfluss einzustellen. Dies ist beispielsweise gut zum Einlassen von Wasser in die genannte Messkammer, um das Wasser bzw. darin enthaltene Partikel oder darin enthaltenes Filtrat zu untersuchen.

Gemäß einer nochmals weiteren Möglichkeit kann mindestens eine der Ventileinrichtungen als sogenanntes Drei-Wege-Ventil ausgebildet sein. Sie kann also dazu dienen, einen Wasserfluss in eine oder zwei von mehreren Richtungen umzulenken, alternativ auch abzusperren.

Wie zuvor angedeutet worden ist, kann ein vorgenanntes Wasserfluss-Einstellmittel entweder als Ventileinrichtung ausgebildet sein, vorteilhaft wie eine der zuvor erläuterten Ventileinrichtungen. Des Weiteren kann es als Pumpe mit mehreren Zugängen und/oder mit mehreren Abgängen ausgebildet sein. So kann ein Wasserfluss gelenkt bzw. verteilt werden. Hierbei ist es auch möglich, dass die mehreren Zugänge und/oder die mehreren Abgänge zumindest teilweise einzeln verschlossen und geöffnet werden können. So kann erreicht werden, was in der Praxis meistens vorteilhaft sein wird, dass Wasser zu einem einzigen Zugang in die Pumpe eintritt und zu einem einzigen Abgang aus ihr austritt. Die anderen Zugänge bzw. Abgänge, falls sie vorhanden sind, wären dann verschlossen.

Eine mögliche vorteilhafte Anordnung für die Pumpe ist zwischen dem Wasserauslass aus der Behandlungskammer und dem Grob-Filtereinlass. So ist es möglich, dass die Pumpe direkt oder relativ direkt hinter dem Wasser-Auslass das Wasser verteilt bzw. pumpt. Das von der Pumpe gepumpte Wasser kann dann direkt danach gefiltert werden.

Alternativ kann die Pumpe so angeordnet sein, dass ein Wasserweg mittels Wasserleitungen von dem Wasser-Auslass zu der Pumpe immer über den Grob-Filter führt bzw. geführt ist. Dann ist der Grob-Filterauslass mit einem Einlass in die Pumpe verbunden. Dadurch wird sichergestellt, dass das Wasser aus dem Wasser-Auslass immer zuerst zumindest grob gefiltert wird, bevor es in die Pumpe eintritt. So können eine zu starke Verschmutzung und möglicherweise ein Verstopfen der Pumpe verhindert werden. Zusätzlich ist es möglich, Wasser aus dem Wasserreservoir, das allerdings auch bereits mindestens einmal grob gefiltert worden ist, unter Umgehung des Grob-Filters direkt in die Pumpe zu führen. Da dieses allerdings bereits grob gefiltert ist besteht insofern kein Problem bezüglich Verschmutzung bzw. Reinhaltung der Pumpe. So kann beispielsweise auch eine Ventileinrichtung, insbesondere ein vorgenanntes Drei-Wege-Ventil, zwischen Grob-Filterauslass und Einlass in die Pumpe angeordnet sein.

In vorteilhafter Ausgestaltung der Erfindung ist die Pumpe in einer Wasserleitung zwischen dem Grob-Filter und dem Fein-Filter angeordnet, insbesondere zwischen einem Grob-Filterauslass und einem Fein-Filtereinlass. So kann Wasser in die Pumpe über den Grob-Filter eingeleitet werden, wobei gepumptes Wasser danach zwar durch den Fein-Filter fließen kann, aber nicht zwingend durch den Fein-Filter fließen muss. Dazu kann hinter der Pumpe eine Abzweigung einer Wasserleitung vorgesehen sein, insbesondere zusammen mit einem vorgenannten Drei-Wege-Ventil. In Weiterbildung der Erfindung ist es möglich, parallel zu einer Wasserleitung zwischen Grob-Filter und Fein-Filter mit der Pumpe darin eine weitere Wasserleitung mit mindestens einer Ventileinrichtung vorzusehen, die auch vom Grob-Filterauslass zu dem Fein-Filtereinlass führt. In dieser parallelen Wasserleitung ist dann keine Pumpe odgl. vorgesehen, vorteilhaft aber eine Ventileinrichtung, insbesondere ein genanntes Drei-Wege-Ventil. So kann zum Beispiel Wasser aus dem Wasserreservoir zum Rückspülen des Grob-Filters genutzt werden ohne Einsatz der Pumpe, wenn das Wasserreservoir höher angeordnet ist als der Grob-Filter.

In vorteilhafter Ausgestaltung der Erfindung sind der Grob-Filter und/oder der Fein-Filter rückspülbar, wie zuvor bereits genannt. So kann jeweils Grob-Filtrat bzw. Fein-Filtrat daraus entfernt werden, welches dann aus dem Grob-Filtratauslass bzw. dem Fein-Filtratauslass austritt. Beide Filtrate können entweder zum Abfluss-Auslass aus dem Haushaltsgerät geführt bzw. gespült werden, um entfernt zu werden. Dann sind die jeweiligen Filter wieder einsatzbereit und leistungsfähig. Zum Rückspülen wird jeweils Wasser in einen der Filterauslässe eingeführt, so dass sozusagen der Wasserweg umgekehrt wird, wie dies an sich bekannt ist. Jeder der Filter kann möglicherweise nur einen einzigen Filterauslass aufweisen, zu dem entweder gefiltertes Wasser für eine weitere Verwendung austritt oder aber Wasser zum Rückspülen eingeleitet wird. Des Weiteren weist jeder Filter einen Filtratauslass auf, zu dem mittels Rückspülen odgl. gelöstes Filtrat entfernt bzw. abgeführt wird. Dieser Filtratauslass kann allgemein unabhängig von der Filterart mit einem Filtereinlass identisch sein, muss dies aber nicht. Dies hängt von der jeweiligen Bauweise des Filters ab, wie dies aber an sich bekannt ist. Des Weiteren ist es möglich, insbesondere zumindest beim Fein-Filter, dass entferntes bzw. durch Rückspülen ausgespültes Filtrat mittels einer Wasserleitung in die Messkammer eingebracht wird, um dort untersucht zu werden. So kann eben untersucht werden, welche Inhaltsstoffe in dem Filtrat vorhanden sind bzw. wie weit beispielsweise der Behandlungsvorgang ist oder ob kritische Inhaltsstoffe im Filtrat sind, die nicht wie üblich zum Abfluss-Auslass aus dem Haushaltsgerät gespült werden sollen. Dies kann beispielsweise für die vorgenannten Mikrofasern aus Kunststoff zutreffen, die aus Umweltgründen besonders bzw. gesondert gehandhabt werden sollten.

Wie zuvor bereits angesprochen worden ist, kann das Wasserreservoir an unterschiedlicher Stelle im Haushaltsgerät angeordnet sein. Es kann vorteilhaft höher als die Filter und die Messkammer angeordnet sein, so dass Wasser daraus selbsttätig in und durch die Filter läuft, vorzugsweise zu deren Rückspülen, oder in die Messkammer hinein. Alternativ kann das Wasserreservoir tiefer als sämtliche dieser Funktionseinheiten angeordnet sein, insbesondere tiefer als die Filter, so dass gefiltertes Wasser sozusagen von alleine in das Wasserreservoir fließt.

In weiterer Ausgestaltung der Erfindung können zwei Wasserreservoire vorgesehen sein. Eines davon kann ein Reinwasser-Reservoir sein, welches vorteilhaft Wasser enthält, das für ein Rückspülen eines Filters verwendet werden soll. Dieses Wasser sollte dann sauber sein bzw. zumindest grob gefiltert sein, vorteilhaft auch fein gefiltert sein. Es kann auch Frischwasser sein. In dem Schmutzwasser-Reservoir kann Wasser für den Behandlungsvorgang im Haushaltsgerät bzw. in der Behandlungskammer gespeichert sein. Dieses Wasser muss nicht sauber bzw. fein gefiltert sein, es kann entweder direkt aus der Behandlungskammer entnommen sein oder aber zumindest aus der Behandlungskammer kommend einmal im Grob-Filter gefiltert sein. Damit kann beispielsweise ein erstes Spülen von Geschirr nach dem Waschvorgang durchgeführt werden, alternativ auch ein Spülen von Wäsche nach einem Waschvorgang.

Es kann vorgesehen sein, dass der Fein-Filterauslass mittels eines vorgenannten Wasserfluss-Einstellmittels zu dem Wasserreservoir und zu der Behandlungskammer geführt ist, wobei zwischen diesen beiden gewählt werden kann. Dazu können ein vorgenanntes Drei-Wege-Ventil oder eine vorgenannte Pumpe mit mehreren Abgängen vorgesehen sein, wobei diese Abgänge in der Pumpe wahlweise verschlossen werden können bzw. das Wasser nur zu einem der mehreren Abgänge herausgepumpt werden kann. So kann fein gefiltertes Wasser entweder in das Wasserreservoir eingespeichert werden oder zurück in die Behandlungskammer gepumpt werden zur weiteren Behandlung darin. Ähnliches kann möglicherweise auch für den Grob-Filter bzw. den Grob-Filterauslass gelten.

Bei der Erfindung weist die Messkammer einen Messkammer-Einlass auf, der mittels Wasserleitungen und einer Ventileinrichtung oder einem vorgenannten Wasserfluss-Einstellmittel mit dem Grob-Filterauslass verbunden ist. So kann grob gefiltertes Wasser bzw. noch darin enthaltene Inhaltsstoffe in der Messkammer untersucht werden. Ein Grob-Filtratauslass ist mit der Messkammer über den Messkammer-Einlass verbunden, um das Grob-Filtrat untersuchen zu können. Dies wird allerdings wahrscheinlich seltener zur Anwendung kommen, da, wie eingangs ausgeführt worden ist, das Grob-Filtrat eigentlich aus einer weiteren Verwendung oder weiteren Verfahren im Haushaltsgerät herausgehalten werden soll und einfach herausgefiltert und abgeführt werden soll.

Eine vorgenannte Messkammer ist beispielsweise bekannt aus der DE 10 2018 205 502.5 mit Anmeldetag vom 11. April 2018 derselben Anmelderin. Insofern wird explizit auf diese Anmeldung verwiesen bezüglich einer Ausgestaltung der Messkammer samt Sensorik udgl..

In ähnlicher Form kann ein Messkammer-Einlass mittels Wasserleitungen und einer Ventileinrichtung oder einem Wasserfluss-Einstellmittel mit dem Fein-Filterauslass verbunden sein. So kann fein gefiltertes Wasser untersucht werden. Hier wird es als vorteilhaft angesehen, wenn auch ein Fein-Filtratauslass mit dem Messkammer-Einlass verbunden ist oder verbunden werden kann, um auf vorgenannte Art und Weise auch Fein-Filtrat in der Messkammer untersuchen zu können.

In Weiterbildung der Erfindung kann die Messkammer einen Messkammer-Auslass aufweisen. An diesem kann eine verschiedenartige geführte Wasserführung vorgesehen sein und entweder zu einem der Filter oder mittels einer Wasserleitung zu dem Abfluss-Auslass führen. So kann untersuchtes Filtrat aus der Messkammer herausgespült werden und ausgelassen werden.

Ein Wasserreservoir, insbesondere ein vorgenanntes Reinwasser-Reservoir, kann zwei Wasserleitungen aufweisen. Eine erste Wasserleitung kann über eine Ventileinrichtung oder ein Wasserfluss-Einstellmittel zu dem Fein-Filterauslass führen, womit vor allem der Fein-Filter rückgespült werden kann. Eine zweite Wasserleitung kann in ähnlicher Weise über eine Ventileinrichtung oder ein Wasserfluss-Einstellmittel an den Grob-Filter, den Fein-Filter und/oder die Pumpe geführt sein. Hier kann besonders vorteilhaft ein Drei-Wege-Ventil oder sogar ein Vier-Wege-Ventil vorgesehen sein, um diese Wasserleitung an jede der drei genannten Funktionseinheiten anzuschließen bzw. Wasser entsprechend leiten zu können. So kann das Frischwasser bzw. saubere Wasser zum Rückspülen bzw. zum Säubern der Pumpe verwendet werden.

Das Wasserreservoir ist mittels zwei Ventileinrichtungen und/oder einem Wasserfluss-Einstellmittel mit dem Grob-Filterauslass, mit dem Fein-Filterauslass und/oder mit einem Einlass in die Pumpe verbunden.

So können diese besonders gut rückgespült bzw. gereinigt werden.

Ein vorgenanntes Schmutzwasser-Reservoir kann mit einer ersten Wasserleitung über eine Ventileinrichtung oder über ein Wasserfluss-Einstellmittel an den Grob-Filterauslass und den Fein-Filterauslass angeschlossen sein. Dadurch ist es möglich, grob gefiltertes Wasser in dieses Wasserreservoir einzuspeisen, und möglicherweise dieses Wasser auch noch einmal im Fein-Filter zu säubern. Mit einer zweiten Wasserleitung kann Wasser über eine Ventileinrichtung oder ein Wasserfluss-Einstellmittel zu dem Fein-Filtratauslass geführt werden, wodurch fein gefiltertes Wasser in das Reservoir eingeleitet werden kann. Eine dritte Wasserleitung kann zu dem Abfluss-Auslass führen, möglicherweise wieder mit Ventileinrichtung bzw. Wasserfluss-Einstellmittel oder Pumpe darin. So kann Schmutzwasser möglicherweise auch einfach ausgelassen werden, wenn es nicht mehr benötigt wird.

In dem Wasserreservoir kann beispielsweise Wasser eingespeichert werden, das gegen Ende eines Spülvorgangs in der Behandlungskammer verwendet wurde und somit relativ sauber ist.

So kann es beispielsweise während der letzten 10 % der Dauer eines Spülvorgangs gewonnen werden bzw. eingespeichert werden. Mit diesem gespeicherten Wasser können dann nach Abschluss des Behandlungsvorgangs in der Behandlungskammer, also wenn das Haushaltsgerät eigentlich fertig ist, die Filter rückgespült werden zur abschließenden Säuberung. Das jeweils daraus rückgespülte Filtrat kann dann direkt aus dem Haushaltsgerät abgelassen werden.

Der Grob-Filter und/oder der Fein-Filter können so ausgebildet sein, dass ihre Filterfeinheit eingestellt werden kann. Dies kann vorteilhaft über ein Einstellen einer Porenweite erfolgen. Zumindest für den Grob-Filter kann dies vorgesehen sein, so dass möglicherweise in Anpassung an zu bearbeitende Gegenstände oder zu erwartende Verschmutzung eingestellt werden kann, wie viel oder welcher Schmutz oder Partikel herausgefiltert werden können. Eine solche Einstellung der Filterfeinheit kann auch beim Fein-Filter vorgesehen sein, um damit einstellen zu können, welche Partikel mit dem Fein-Filter aus dem Wasser herausgefiltert werden, um anschließend untersucht zu werden in der Messkammer.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in Zwischen-Überschriften und einzelne Abschnitte beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine vereinfachte schematische Ansicht einer Waschmaschine als Haushaltsgerät,
- Fig. 2: eine Funktionsansicht der Waschmaschine aus Fig. 1 ohne Ventile und
- Fig. 3: eine schematische Funktionsdarstellung eines Geschirrspülers mit verschiedenen Baueinheiten.

### Detaillierte Beschreibung der Ausführungsbeispiele

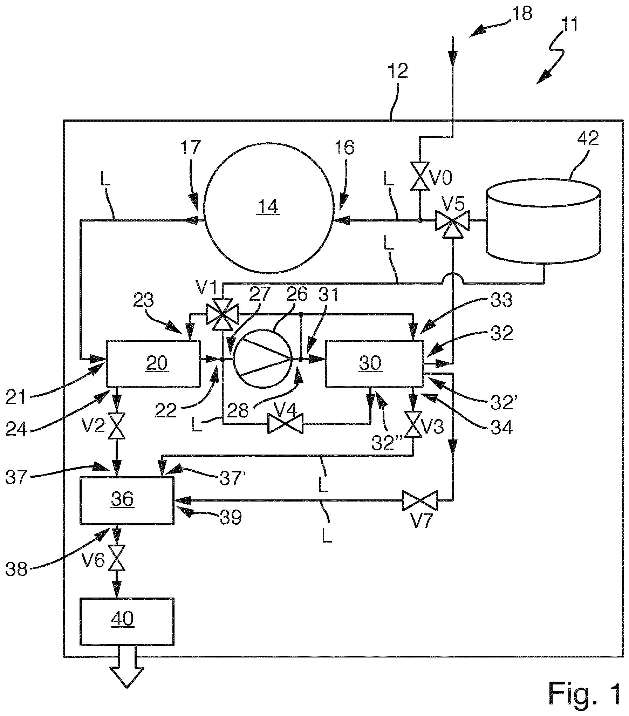

In der Fig. 1 ist eine Waschmaschine 11 vereinfacht dargestellt mit einem Gehäuse 12, die eine Trommel 14 als Behandlungskammer aufweist. Die Trommel 14 ist wie üblich bei einer Waschmaschine ausgebildet, um darin Wäsche zu waschen. Sie ist mit einer hier nicht dargestellten Türe oder Klappe zum Verschließen versehen. Ein Wassereinlass 16 führt in die Trommel hinein und ein Wasserauslass 17 führt aus der Trommel heraus. Deren Anordnung soll nur schematisch zu verstehen sein, vorteilhaft ist der Wassereinlass 16 oben und der Wasserauslass 17 unten angeordnet wie üblich. Des Weiteren kann der Wassereinlass 16 auch über eine sogenannte Waschmittel-Schublade führen, bei der mittels Klappen, Ventilen odgl. durch einlaufendes Wasser, möglicherweise auch durch einlaufendes Frischwasser, Waschmittel oder sonstige Zusatzstoffe in die Trommel 14 hinein zur Behandlung der Wäsche gespült werden können. Eine Frischwasser-Zuführung 18 führt mit einem Ventil V0 und mittels einer Leitung L zum Wassereinlass 16, insbesondere zu einer vorgenannten Waschmittel-Schublade.

Vom Wasserauslass 17 geht eine Leitung L ab, die wie alle Wasserleitungen mit dem Bezugszeichen "L" gekennzeichnet ist. Sie führt zu einem Grob-Filter 20, und zwar an einem Grob-Filtereinlass 21. Der Grob-Filter 20 weist noch einen Grob-Filterauslass 22 sowie einen Grob-Filtratauslass 24 auf. Der hier dargestellte Grob-Filter 20 weist auch noch einen Grob-Rückspüleinlass 23 auf, bei dem anhand der Pfeilrichtung schon erkennbar ist, dass Wasser in den Grob-Filter 20 hineinfließen soll, um diesen rückzuspülen zum Säubern bzw. Freispülen. Herausgespültes Grob-Filtrat tritt dann am Grob-Filtratauslass 24 aus an einer entsprechenden Wasserleitung L, die an ein Ventil V2 geführt ist. Der Grob-Filter 20 könnte aber auch so ausgebildet sein, dass Wasser zum Rückspülen in den Grob-Filterauslass 22 eingebracht wird. Dann könnte der Grob-Rückspüleinlass 23 entfallen. Ähnlich könnte das Grob-Filtrat auch zum Grob-Filtereinlass 21 herausgespült werden, dann könnte auch der Grob-Filtratauslass 24 entfallen. Es würde allerdings ein Ventil vor dem Grob-Filter 20 nötig, um eine Leitung L für einlaufendes Wasser von einer Leitung L für herausgespültes Grob-Filtrat trennen zu können.

Sowohl Grob-Filterauslass 22 als auch Grob-Rückspüleinlass 23 sind an ein Vier-Wege-Ventil V1 geführt nach einer Abzweigung. Des Weiteren geht eine Leitung L aber direkt zu einer Pumpe 26, die einen Pumpeneinlass 27 und einen Pumpenauslass 28 aufweist. Somit ist klar, dass Wasser aus der Trommel 14 nur durch den Grob-Filter 20 in die Pumpe 26 eintreten kann, so dass dieses Wasser stets zumindest grob gefiltert ist zum Schutz der Pumpe 26. Vorteilhaft ist die Pumpe 26 als Impellerpumpe ausgebildet.

Der Pumpenauslass 28 ist mittels einer Leitung L zum einen an einen Fein-Filter 30 geführt, und zwar an dessen Fein-Filtereinlass 31. Der Fein-Filter 30 weist hier sogar drei Fein-Filterauslässe 32, 32` und 32" auf. Diese könnten natürlich auch durch einen einzigen Fein-Filterauslass mit einem entsprechenden Ventil ersetzt werden. Des Weiteren weist der Fein-Filter 30 einen Fein-Filtratauslass 34 auf, der mittels einer Wasserleitung L an ein Ventil V3 geführt ist. Der Fein-Filterauslass 32" ist an ein Ventil V4 mittels einer Wasserleitung L verbunden. Der Fein-Filterauslass 32 ist mittels einer Wasserleitung L mit einem Drei-Wege-Ventil V5 verbunden. Der Fein-Filterauslass 32' ist mittels einer Wasserleitung L an ein Ventil V7 verbunden.

Vom Vier-Wege-Ventil V1 und direkt von der Pumpe 26 führt eine Wasserleitung L an einen Fein-Rückspüleinlass 33 des Fein-Filters 30. Wie zuvor erläutert, könnte ein Rückspülen auch über einen Fein-Filterauslass erfolgen, ggf. zum Fein-Filtereinlass 31 heraus, dann wäre die Wasserführung entsprechend anders. Das Rückspülen kann mit Hilfe der Pumpe 26 erfolgen oder ohne diese, nämlich nur mit Schwerkraft, erfolgen. Dazu kann ein eingangs genanntes Reinwasser-Reservoir genutzt werden, das höher angeordnet ist. Der Fein-Filterauslass 32" führt über das Ventil V4 an die Wasserleitung L zwischen Grob-Filter 20 und Pumpe 26 sowie an das Ventil V1. Somit kann fein gefiltertes Wasser wie eingangs erläutert entweder zum Spülen bzw. Säubern der Pumpe 26 verwendet werden oder es kann es direkt zum Rückspülen des Grob-Filters 20 verwendet werden.

Vom Ventil V1 führt eine Wasserleitung L zu einem rechts oben angeordneten Reinwasser-Reservoir 42. Dieses Reinwasser-Reservoir 42 ist, wie eingangs erläutert, vorteilhaft möglichst weit oben in der Waschmaschine 11 bzw. im Gehäuse 12 angeordnet, so dass die anderen Funktionseinheiten, insbesondere auch die Trommel 14, auf einem niedrigeren Höhenniveau liegen. So kann im Reinwasser-Reservoir 42 gespeichertes Wasser durch einfaches Fließen und ohne Pumpen in eine der Funktionseinheiten eingeleitet werden.

Mittels des Drei-Wege-Ventils V5 ist das Reinwasser-Reservoir 42 auch mit der Trommel 14 verbunden, um dort Wasser einzulassen wie eingangs erläutert. Des Weiteren kann Wasser mittels der Wasserleitung L zum Ventil V1 geführt werden und von dort aus zum Rückspülen des Grob-Filters 20 am Grob-Rückspüleinlass 23 genutzt werden, ebenso zum Rückspülen des Fein-Filters 30 am Grob-Rückspüleinlass 33.

Gerade über das Ventil V1 könnte auch nur grob gefiltertes Wasser hinter dem Grob-Filter 20 über dessen Grob-Filterauslass 22 und die Pumpe 26 mit Auslass 28 in das Reinwasser-Reservoir 42 eingespeist werden, das beispielsweise von einem der letzten Spülvorgänge stammt, wie eingangs erläutert. Das wäre dann aber genau genommen kein Reinwasser. Für diesen Zweck könnte ein weiteres Reservoir bereitgestellt werden, nämlich ein eingangs genanntes Schmutzwasser-Reservoir.

Eine weitere Wasserleitung, die hier nicht eingezeichnet ist, kann noch von der Pumpe 26 bzw. dem Pumpenauslass 28 direkt zum Wassereinlass 16 der Trommel 14 geführt sein, wie dies an sich auch üblich ist. So kann das Wasser sozusagen zirkulieren, ohne dass hinter der Pumpe 26 noch einmal Funktionseinheiten zur Behandlung des Wassers vorgesehen sein müssen. Dieses zirkulierende Wasser würde dann aber immer zumindest grob gefiltert werden.

Es ist eine Messkammer 36 vorgesehen, wie sie eingangs erläutert worden ist. Die Messkammer 36 weist zwei Messkammereinlässe 37 und 37` auf. Der Messkammereinlass 37 ist mittels des Ventils V2 der Grob-Filtratauslass 24 verbunden, so dass dieses Grob-Filtrat in der Messkammer 36 entsprechend untersucht werden kann. Der Messkammereinlass 37` ist mittels des Ventils V3 mit dem Fein-Filtratauslass 34 verbunden. So kann Fein-Filtrat in die Messkammer 36 gegeben werden, um dies zu untersuchen, wie eingangs erläutert worden ist.

Filtrat kann aus der Messkammer 36 entweder manuell entnommen werden, um es als Abfall zu entsorgen. Vorteilhaft kann es aber zu dem Messkammerauslass 38 über ein weiteres Ventil V6 ausgelassen werden und zum Abfluss-Auslass 40 geführt werden, um es herausspülen zu können. Hierfür ist die Messkammer 36 mit einem Messkammer-Rückspüleinlass 39 versehen, der mit dem Fein-Filterauslass 32` verbunden ist. So kann fein gefiltertes Wasser genutzt werden, um die Messkammer 36 zu säubern bzw. auszuspülen, wie eingangs erläutert worden ist. Alternativ könnte die entsprechende Wasserleitung L mit dem Ventil V7 darin auch an das Reinwasser-Reservoir 42 geführt sein, um daraus Wasser zu entnehmen, um die Messkammer 36 auszuspülen. Hier ist eine Leitung L mit einem Ventil V0 darin als Frischwasseranschluss 18 zu der Waschmaschine 11 geführt, um die Messkammer 36 mit möglichst sauberem Wasser ausspülen zu können.

In der Waschmaschine 11 könnte ein weiteres Schmutzwasser-Reservoir vorgesehen sein, um grob gefiltertes Wasser darin zu speichern, beispielsweise auch nach einem der Spülvorgänge. Dieses grob gefilterte Wasser könnte dann für einen weiteren Behandlungsvorgang in der Waschmaschine 11 verwendet werden, beispielsweise um schmutzige Wäsche ganz zu Beginn zu spülen, wofür das nicht ganz saubere weil nur grob gefilterte Wasser ausreicht.

Nicht dargestellt ist eine Steuereinrichtung der Waschmaschine 11, mit der sowohl deren eigentliches Waschverfahren als auch das Schalten der Ventile, der Betrieb der Pumpe 26 und die Messungen in der Messkammer 36 durchgeführt werden können. Diese ist aber leicht vorstellbar, bezüglich der Analysefunktionen in der Messkammer 36 wird auf die eingangs genannte DE 10 2018 205 502.5 verwiesen.

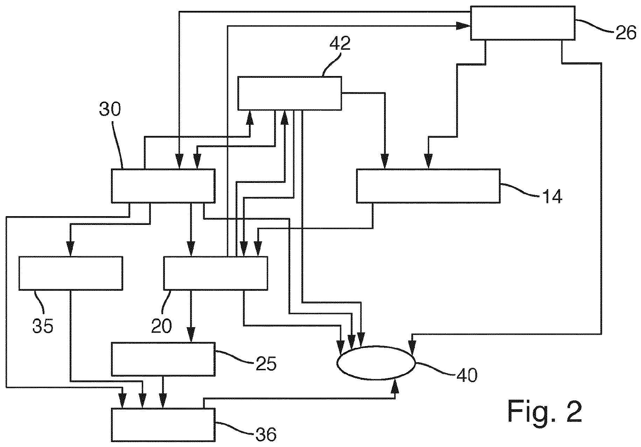

In der Fig. 2 ist in nochmals weiterer Darstellung eine Vereinfachung der Fig. 1 gezeigt, bei der es weniger auf den konstruktiven Aufbau sondern mehr auf die Möglichkeiten der Wasserführung ankommt. Durch Weglassen von Ventilen sind die Wasserführungsmöglichkeiten übersichtlicher dargestellt. Hier ist dargestellt, wie Grob-Filtrat 25 und Fein-Filtrat 35 jeweils in die Messkammer 36 gebracht werden können. Dies erfolgt vorteilhaft, indem der jeweilige Filter rückgespült wird, um das Filtrat von dort herauszuspülen und in die Messkammer 36 hinein zu spülen. Des Weiteren ist der Fein-Filter 30 mit der Messkammer 36 verbunden zu deren Rückspülen bzw. Säubern und Auslassen des Inhalts zum Abfluss-Auslass 40.

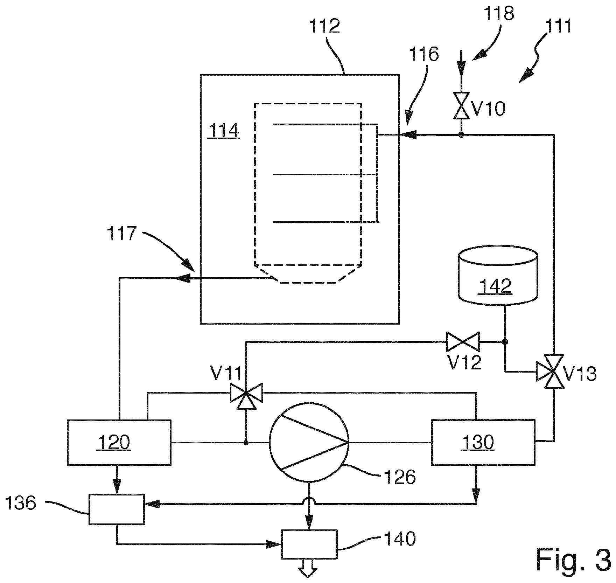

In der Fig. 3 ist etwas vereinfachter für eine Spülmaschine 111 mit Gehäuse 112 und einer Behandlungskammer 114 darin dargestellt, die wie üblich mittels einer Tür verschließbar ist, wie eine Verschaltung mittels Leitungen L erfolgen kann. An einem Wasserauslass 117 tritt Wasser aus der Behandlungskammer 114 aus und fließt in einen Grob-Filter 120 hinein. Von dort kann das Wasser entweder direkt in eine Pumpe 126 geführt werden zu einem Fein-Filter 130, und von dort aus wiederum über ein Drei-Wege-Ventil V13 entweder zum Wassereinlass 116 wieder in die Behandlungskammer 114 hinein. Alternativ kann es in ein Reinwasser-Reservoir 142 eingespeichert werden. Von dort aus kann es mittels des Ventils V12 und des Drei-Wege-Ventils V11 zum Rückspülen des Grob-Filters 120 und/oder des Fein-Filters 130, dargestellt durch das Eintreten von oben in diese Filter, genutzt werden, um diese Filter jeweils rückzuspülen. Schließlich kann das Reinwasser aus dem Reinwasser-Reservoir 142 mittels des Ventils V13 auch in die Behandlungskammer 114 am Wassereinlass 116 eintreten. Über die Ventile V12 und V11 kann das Reinwasser auch zum Spülen bzw. Säubern der Pumpe 126 genutzt werden. Ein Frischwasseranschluss 118 führt mittels eines Ventils V10 an den Wassereinlass 116.

Vom Grob-Filter 120 und vom Fein-Filter 130 führt ein Filterauslass jeweils nach unten hin zu einer Messkammer 136, um, wie zuvor zur Fig. 1 erläutert worden ist, durch Rückspülen herausgeholtes Filtrat darin auf dessen Eigenschaften zu untersuchen. Zusätzlich oder alternativ könnte das herausgespülte Filtrat zu dem Abfluss-Auslass 140 entsprechend Fig. 1 führen. Von der Pumpe 126 kann ein weiterer Abgang wie durch den Pfeil angedeutet ist nach unten zu dem Abfluss-Auslass 140 führen. Dazu können die beiden Abgänge der Pumpe 126 beispielsweise mittels Ventilen geöffnet und geschlossen werden.

## Patentansprüche

1. Wasserführendes Haushaltsgerät (11, 111) mit:
- mindestens einer Behandlungskammer (14, 114), die verschließbar ist und in der Gegenstände behandelt werden können,
- mindestens einem Wassereinlass (16, 116) in die Behandlungskammer (14, 114),
- mindestens einem Wasserauslass (17, 117) aus der Behandlungskammer (14, 114),
- mindestens einer Pumpe (26, 126), die dem Wasserauslass (17, 117) nachgeschaltet ist,
- Wasserleitungen (L),
- Ventileinrichtungen (V) und/oder Wasserfluss-Einstellmitteln,
- einem Grob-Filter (20, 120) für Wasser mit einem Grob-Filtereinlass (21) und mit einem Grob-Filterauslass (22) für grob gefiltertes Wasser, wobei der Grob-Filter (20, 120) an seinem Grob-Filtereinlass (21) mittels einer Wasserleitung (L) mit der Behandlungskammer (14, 114) verbunden ist,
- einem Fein-Filter (30, 130) für Wasser mit einem Fein-Filtereinlass (31), mit einem Fein-Filterauslass (32) für fein gefiltertes Wasser und mit einem Fein-Filtratauslass (34) für Fein-Filtrat, wobei der Fein-Filter (30, 130) an seinem Fein-Filtereinlass (31) mittels einer Wasserleitung (L) mit dem Grob-Filterauslass (22) verbunden ist,
- einem Abfluss-Auslass (40, 140) aus dem Gerät (11, 111),
- mindestens einem Wasserreservoir (42, 142), das mittels Wasserleitungen (L) mit der Pumpe (26, 126), dem Abfluss-Auslass (40, 140) und dem Grob-Filter (20, 120) und dem Fein-Filter (30, 130) verbunden ist,
wobei
- hinter dem Grob-Filterauslass (22) und dem Fein-Filterauslass (32) jeweils eine Wasserleitung (L) wegführt und darin eine Ventileinrichtung (V) und/oder ein Wasserfluss-Einstellmittel vorgesehen sind,
- das Wasserreservoir (42, 142) mit dem Grob-Filterauslass (22) und mit dem Fein-Filterauslass (32) verbunden ist sowie mit dem Fein-Filtereinlass (31) verbunden ist,
**dadurch gekennzeichnet, dass**:
- der Grob-Filter (20, 120) einen Grob-Filtratauslass (24) für Grob-Filtrat aufweist,
- eine Messkammer (36, 136) zur Untersuchung von Wasser und/oder Filtrat darin vorgesehen ist,
- die Messkammer (36, 136) einen Messkammer-Einlass (37, 37') aufweist, der mittels Wasserleitungen (L) und einer Ventileinrichtung (V) oder einem Wasserfluss-Einstellmittel mit dem Grob-Filtratauslass (24) oder mit dem Fein-Filtratauslass (34) verbunden ist.

2. Haushaltsgerät nach Anspruch 1, **dadurch gekennzeichnet, dass** ein Wasserweg mittels Wasserleitungen (L) von dem Wasser-Auslass (17, 117) aus der Behandlungskammer (14, 114) zu der Pumpe (26, 126) immer über den Grob-Filter (20, 120) geführt ist, wobei der Grob-Filterauslass (22) mit einem Einlass (27) in die Pumpe (26, 126) verbunden ist.

3. Haushaltsgerät nach Anspruch 1 oder 2, **dadurch gekennzeichnet, dass** die Pumpe (26, 126) in einer Wasserleitung (L) zwischen dem Grob-Filter (20, 120) und dem Fein-Filter (30, 130) angeordnet ist, nämlich zwischen dem Grob-Filterauslass (22) und dem Fein-Filtereinlass (31).

4. Haushaltsgerät nach einem der vorhergehenden Ansprüche, **dadurch gekennzeichnet, dass** der Grob-Filter (20, 120) rückspülbar ist zur Entfernung von Grob-Filtrat daraus aus dem Grob-Filtratauslass (24), wobei der Grob-Filtratauslass (24) mittels einer Wasserleitung (L) zu dem Abfluss-Auslass (40, 140) aus dem Haushaltsgerät (11, 111) geführt ist.

5. Haushaltsgerät nach einem der vorhergehenden Ansprüche, **dadurch gekennzeichnet, dass** der Fein-Filter (30, 130) rückspülbar ist zur Entfernung von Fein-Filtrat daraus aus dem Fein-Filtratauslass (34), wobei der Fein-Filtratauslass (34) mittels einer Wasserleitung (L) zu dem Abfluss-Auslass (40, 140) aus dem Haushaltsgerät (11, 111) geführt ist.

6. Haushaltsgerät nach einem der vorhergehenden Ansprüche, **dadurch gekennzeichnet, dass** das Wasserreservoir ein Reinwasser-Reservoir (42, 142) ist und ein anderes weiteres Wasserreservoir vorgesehen ist, das ein Schmutzwasser-Reservoir ist, wobei das Reinwasser-Reservoir (42, 142) zum Rückspülen der Filter (20, 30, 120, 130) ausgebildet ist und das Schmutzwasser-Reservoir für den Behandlungsvorgang vorgesehen ist.

7. Haushaltsgerät nach einem der vorhergehenden Ansprüche, **dadurch gekennzeichnet, dass** der Fein-Filterauslass (32) mittels einem Wasserfluss-Einstellmittel (V5, V13) zu dem Wasserreservoir (42, 142) und zu der Behandlungskammer (14, 114) geführt ist.

8. Haushaltsgerät nach einem der vorhergehenden Ansprüche, **dadurch gekennzeichnet, dass** der Messkammer-Einlass (37) auch mit dem Grob-Filterauslass (22) verbunden ist.

9. Haushaltsgerät nach einem der vorhergehenden Ansprüche, **dadurch gekennzeichnet, dass** das Wasserreservoir (42, 142) mit zwei Wasserleitungen (L) verbunden ist, wobei eine erste Wasserleitung (L) über eine Ventileinrichtung (V) oder ein Wasserfluss-Einstellmittel zu dem Fein-Filterauslass (32) führt, und die zweite Wasserleitung (L) über eine Ventileinrichtung (V) oder ein Wasserfluss-Einstellmittel an den Grob-Filter (20, 120), den Fein-Filter (30, 130) und/oder die Pumpe (26, 126) geführt ist.

10. Haushaltsgerät nach einem der vorhergehenden Ansprüche, **dadurch gekennzeichnet, dass** das Wasserreservoir (42, 142) mit einer ersten Wasserleitung (L) über eine Ventileinrichtung (V) oder ein Wasserfluss-Einstellmittel zu dem Grob-Filterauslass (22) und dem Fein-Filtereinlass (31) führt, und mit einer zweiten Wasserleitung (L) über eine Ventileinrichtung (V) oder ein Wasserfluss-Einstellmittel zu dem Fein-Filtratauslass (34) führt, und mit einer dritten Wasserleitung (L) zu dem Abfluss-Auslass (40, 140) führt.

11. Verfahren zum Betrieb eines wasserführenden Haushaltsgeräts (11, 111) nach einem der vorhergehenden Ansprüche, **dadurch gekennzeichnet, dass** zum Reinigen der Pumpe (26, 126) Wasser aus dem Wasserreservoir (42, 142) in die Pumpe (26, 126) hinein und wieder heraus gepumpt wird.

12. Verfahren nach Anspruch 11, **dadurch gekennzeichnet, dass** zum Reinigen der Pumpe (26, 126) fein gefiltertes Wasser aus dem Wasserreservoir (42, 142) in die Pumpe (26, 126) hinein und wieder heraus gepumpt wird.

13. Verfahren nach Anspruch 11 oder 12, **dadurch gekennzeichnet, dass** Wasser aus dem Wasserreservoir (42, 142) durch die Pumpe (26, 126) zurück in das Wasserreservoir gepumpt wird mit dazwischen geschaltetem Fein-Filter (30, 130).

## Claims

1. Water-carrying household appliance (11, 111) with:
- at least one treatment chamber (14, 114) which can be closed and in which objects can be treated,
- at least one water inlet (16, 116) into the treatment chamber (14, 114),
- at least one water outlet (17, 117) from the treatment chamber (14, 114),
- at least one pump (26, 126), which is connected downstream of the water outlet (17, 117),
- water lines (L),
- valve devices (V) and/or water flow adjustment means,
- a coarse filter (20, 120) for water with a coarse filter inlet (21) and with a coarse filter outlet (22) for coarsely filtered water, the coarse filter (20, 120) being connected at its coarse filter inlet (21) to the treatment chamber (14, 114) by means of a water line (L),
- a fine filter (30, 130) for water with a fine filter inlet (31), with a fine filter outlet (32) for finely filtered water and with a fine filtrate outlet (34) for fine filtrate, the fine filter (30, 130) being connected at its fine filter inlet (31) to the coarse filter outlet (22) by means of a water line (L),
- a drain outlet (40, 140) from the appliance (11, 111),
- at least one water reservoir (42, 142), which is connected to the pump (26, 126), the drain outlet (40, 140) and the coarse filter (20, 120) and the fine filter (30, 130) by means of water lines (L),
wherein
- a water line (L) leads away behind the coarse filter outlet (22) and the fine filter outlet (32) and a valve device (V) and/or a water flow adjustment means are provided therein,
- the water reservoir (42, 142) is connected to the coarse filter outlet (22) and to the fine filter outlet (32) and is connected to the fine filter inlet (31),
**characterized in that**:
- the coarse filter (20, 120) has a coarse filtrate outlet (24) for coarse filtrate,
- a measuring chamber (36, 136) for examining water and/or filtrate is provided therein,
- the measuring chamber (36, 136) has a measuring chamber inlet (37, 37') which is connected to the coarse filtrate outlet (24) or to the fine filtrate outlet (34) by means of water pipes (L) and a valve device (V) or a water flow adjustment means.

2. Household appliance according to claim 1, **characterized in that** a water path by means of water pipes (L) from the water outlet (17, 117) from the treatment chamber (14, 114) to the pump (26, 126) is always routed via the coarse filter (20, 120), the coarse filter outlet (22) being connected to an inlet (27) into the pump (26, 126).

3. Household appliance according to claim 1 or 2, **characterized in that** the pump (26, 126) is arranged in a water line (L) between the coarse filter (20, 120) and the fine filter (30, 130), namely between the coarse filter outlet (22) and the fine filter inlet (31).

4. Household appliance according to one of the preceding claims, **characterized in that** the coarse filter (20, 120) can be backwashed for removing coarse filtrate therefrom from the coarse filtrate outlet (24), wherein the coarse filtrate outlet (24) is led by means of a water conduit (L) to the drain outlet (40, 140) from the household appliance (11, 111).

5. Household appliance according to one of the preceding claims, **characterized in that** the fine filter (30, 130) can be backwashed for removing fine filtrate therefrom from the fine filtrate outlet (34), the fine filtrate outlet (34) being guided to the drain outlet (40, 140) from the household appliance (11, 111) by means of a water conduit (L).

6. Household appliance according to one of the preceding claims, **characterized in that** the water reservoir is a clean water reservoir (42, 142) and another further water reservoir is provided, which is a dirty water reservoir, the clean water reservoir (42, 142) being designed for backwashing the filters (20, 30, 120, 130) and the dirty water reservoir being provided for the treatment process.

7. Household appliance according to one of the preceding claims, **characterized in that** the fine filter outlet (32) is guided to the water reservoir (42, 142) and to the treatment chamber (14, 114) by means of a water flow adjustment means (V5, V13).

8. Household appliance according to one of the preceding claims, **characterized in that** the measuring chamber inlet (37) is also connected to the coarse filter outlet (22).

9. Household appliance according to one of the preceding claims, **characterized in that** the water reservoir (42, 142) is connected to two water lines (L), a first water line (L) leading to the fine filter outlet (32) via a valve device (V) or a water flow adjustment means, and the second water line (L) leading to the coarse filter (20, 120), the fine filter (30, 130) and/or the pump (26, 126) via a valve device (V) or a water flow adjustment means.

10. Household appliance according to one of the preceding claims, **characterized in that** the water reservoir (42, 142) leads with a first water line (L) via a valve device (V) or a water flow adjusting means to the coarse filter outlet (22) and the fine filter inlet (31), and leads with a second water line (L) via a valve device (V) or a water flow adjusting means to the fine filtrate outlet (34), and leads with a third water line (L) to the drain outlet (40, 140).

11. Method for operating a water-carrying household appliance (11, 111) according to one of the preceding claims, **characterized in that** water is pumped from the water reservoir (42, 142) into the pump (26, 126) and back out again in order to clean the pump (26, 126).

12. Method according to claim 11, **characterized in that**, for cleaning the pump (26, 126), finely filtered water is pumped from the water reservoir (42, 142) into the pump (26, 126) and back out again.

13. Method according to claim 11 or 12, **characterized in that** water is pumped from the water reservoir (42, 142) through the pump (26, 126) back into the water reservoir with a fine filter (30, 130) connected in between.

## Revendications

1. Appareil ménager à eau (11, 111) comprenant :
- au moins une chambre de traitement (14, 114) qui peut être fermée et dans laquelle des objets peuvent être traités,
- au moins une entrée d'eau (16, 116) dans la chambre de traitement (14, 114),
- au moins une sortie d'eau (17, 117) de la chambre de traitement (14, 114),
- au moins une pompe (26, 126) placée en aval de la sortie d'eau (17, 117),
- des conduites d'eau (L),
- des dispositifs de vanne (V) et/ou des moyens de réglage du débit d'eau,
- un filtre grossier (20, 120) pour l'eau avec une entrée de filtre grossier (21) et avec une sortie de filtre grossier (22) pour l'eau filtrée grossièrement, le filtre grossier (20, 120) étant relié à son entrée de filtre grossier (21) au moyen d'une conduite d'eau (L) à la chambre de traitement (14, 114),
- un filtre fin (30, 130) pour l'eau avec une entrée de filtre fin (31), avec une sortie de filtre fin (32) pour l'eau finement filtrée et avec une sortie de filtrat fin (34) pour le filtrat fin, le filtre fin (30, 130) étant relié à son entrée de filtre fin (31) au moyen d'une conduite d'eau (L) à la sortie de filtre grossier (22),
- une sortie d'évacuation (40, 140) de l'appareil (11, 111),
- au moins un réservoir d'eau (42, 142) relié par des conduites d'eau (L) à la pompe (26, 126), à la sortie d'évacuation (40, 140) et au filtre grossier (20, 120) et au filtre fin (30, 130),
cependant
- une conduite d'eau (L) part de la sortie du filtre grossier (22) et de la sortie du filtre fin (32), respectivement, et un dispositif de vanne (V) et/ou un moyen de réglage du débit d'eau y sont prévus,
- le réservoir d'eau (42, 142) est relié à la sortie de filtre grossier (22) et à la sortie de filtre fin (32) et est relié à l'entrée de filtre fin (31),
**caractérisé en ce que** :
- le filtre grossier (20, 120) comporte une sortie de filtrat grossier (24) pour le filtrat grossier,
- une chambre de mesure (36, 136) pour l'analyse de l'eau et/ou du filtrat est prévue à l'intérieur,
- la chambre de mesure (36, 136) comprend une entrée de chambre de mesure (37, 37') reliée à la sortie de filtrat grossier (24) ou à la sortie de filtrat fin (34) par des conduites d'eau (L) et un dispositif de vanne (V) ou un moyen de réglage du débit d'eau.

2. Appareil ménager selon la revendication 1, **caractérisé en ce qu'**un trajet d'eau est toujours guidé au moyen de conduites d'eau (L) depuis la sortie d'eau (17, 117) de la chambre de traitement (14, 114) vers la pompe (26, 126) via le filtre grossier (20, 120), la sortie du filtre grossier (22) étant reliée à une entrée (27) dans la pompe (26, 126).

3. Appareil ménager selon la revendication 1 ou 2, **caractérisé en ce que** la pompe (26, 126) est disposée dans une conduite d'eau (L) entre le filtre grossier (20, 120) et le filtre fin (30, 130), à savoir entre la sortie du filtre grossier (22) et l'entrée du filtre fin (31).

4. Appareil ménager selon l'une quelconque des revendications précédentes, **caractérisé en ce que** le filtre grossier (20, 120) peut être lavé à contre-courant pour éliminer le filtrat grossier de celui-ci de la sortie de filtrat grossier (24), la sortie de filtrat grossier (24) étant guidée par une conduite d'eau (L) vers la sortie d'évacuation (40, 140) de l'appareil ménager (11, 111).

5. Appareil ménager selon l'une quelconque des revendications précédentes, **caractérisé en ce que** le filtre fin (30, 130) peut être lavé à contre-courant pour éliminer le filtrat fin de celui-ci de la sortie de filtrat fin (34), la sortie de filtrat fin (34) étant guidée par une conduite d'eau (L) vers la sortie d'évacuation (40, 140) de l'appareil ménager (11, 111).

6. Appareil ménager selon l'une des revendications précédentes, **caractérisé en ce que** le réservoir d'eau est un réservoir d'eau pure (42, 142) et **en ce qu'**il est prévu un autre réservoir d'eau supplémentaire qui est un réservoir d'eau sale, le réservoir d'eau pure (42, 142) étant conçu pour le rinçage à contre-courant des filtres (20, 30, 120, 130) et le réservoir d'eau sale étant prévu pour le processus de traitement.

7. Appareil ménager selon l'une des revendications précédentes, **caractérisé en ce que** la sortie de filtre fin (32) est guidée vers le réservoir d'eau (42, 142) et vers la chambre de traitement (14, 114) par un moyen de réglage de débit d'eau (V5, V13).

8. Appareil ménager selon l'une des revendications précédentes, **caractérisé en ce que** l'entrée de la chambre de mesure (37) est également reliée à la sortie du filtre grossier (22).

9. Appareil ménager selon l'une des revendications précédentes, **caractérisé en ce que** le réservoir d'eau (42, 142) est relié à deux conduites d'eau (L), une première conduite d'eau (L) menant à la sortie du filtre fin (32) via un dispositif de vanne (V) ou un moyen de réglage du débit d'eau, et la deuxième conduite d'eau (L) menant au filtre grossier (20, 120), au filtre fin (30, 130) et/ou à la pompe (26, 126) via un dispositif de vanne (V) ou un moyen de réglage du débit d'eau.

10. Appareil ménager selon l'une des revendications précédentes, **caractérisé en ce que** le réservoir d'eau (42, 142) est relié par une première conduite d'eau (L) à la sortie du filtre grossier (22) et à l'entrée du filtre fin (31) par l'intermédiaire d'un dispositif de vanne (V) ou d'un moyen de réglage du débit d'eau, et par une deuxième conduite d'eau (L) à la sortie du filtrat fin (34) par l'intermédiaire d'un dispositif de vanne (V) ou d'un moyen de réglage du débit d'eau, et par une troisième conduite d'eau (L) à la sortie d'évacuation (40, 140).

11. Procédé de fonctionnement d'un appareil ménager à eau (11, 111) selon l'une quelconque des revendications précédentes, **caractérisé en ce que**, pour nettoyer la pompe (26, 126), de l'eau est pompée dans la pompe (26, 126) à partir du réservoir d'eau (42, 142) et à nouveau à partir de celui-ci.

12. Procédé selon la revendication 11, **caractérisé en ce que**, pour nettoyer la pompe (26, 126), de l'eau finement filtrée est pompée du réservoir d'eau (42, 142) pour entrer dans la pompe (26, 126) et en sortir.

13. Procédé selon la revendication 11 ou 12, **caractérisé en ce que** l'eau est pompée du réservoir d'eau (42, 142) à travers la pompe (26, 126) pour revenir dans le réservoir d'eau avec un filtre fin (30, 130) intercalé.
